(19) Europäisches Patentamt
European Patent Office
Office européen des brevets

(11) **EP 4 685 977 A1**

(12) **EUROPEAN PATENT APPLICATION**
published in accordance with Art. 153(4) EPC

(43) Date of publication:
**28.01.2026 Bulletin 2026/05**

(21) Application number: **23937333.5**

(22) Date of filing: **25.12.2023**

(51) International Patent Classification (IPC):
**H01M 50/491** (2021.01)     **H01M 10/0525** (2010.01)
**H01M 50/414** (2021.01)     **H01M 50/497** (2021.01)
**H01M 50/489** (2021.01)     **H01M 50/403** (2021.01)

(52) Cooperative Patent Classification (CPC):
Y02E 60/10

(86) International application number:
**PCT/CN2023/141609**

(87) International publication number:
**WO 2024/234662 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.05.2023  CN 202310565790**

(71) Applicant: **Sunwoda Mobility Energy Technology
Co., Ltd.
Shenzhen, Guangdong 518107 (CN)**

(72) Inventor: **XIA, Xianjie
Shenzhen, Guangdong 518107 (CN)**

(74) Representative: **Boult Wade Tennant LLP
Salisbury Square House
8 Salisbury Square
London EC4Y 8AP (GB)**

(54) **SEPARATOR, SECONDARY BATTERY, AND ELECTRIC DEVICE**

(57)     A separator, and a secondary battery and an electric device respectively comprising the separator. The separator comprises a base film; and the base film comprises nanocellulose. When the separator is heated from an initial temperature T0 to T1 at a heating rate of 5-10°C/min, the porosity P of the separator satisfies: $(P0-P1)/P0 \leq 5\%$, wherein $30°C \leq T1-T0 \leq 60°C$, $80°C \leq T0 \leq 100°C$, P0 is the porosity of the separator at T0, and P1 is the porosity of the separator at T1.

CELLULOSE SLURRY
① GRINDING  OXIDIZING
OXIDE SLURRY
② STIRRING  DILUTING
SUSPENSION
③ HOMOGENIZING  EVAPORATION
HOMOGENIZING AND STIRRING ④
SUSPENSION ← MONODISPERSE POLYSTYRENE PS SPHERES
ORGANIC SOLVENT BATH → GEL → INTERMEDIATE FILM (DRY FILM) → TOLUENE BATH → NANOCELLULOSE SEPARATOR

FIG. 1

EP 4 685 977 A1

**Description**

**CROSS-REFERENCE TO RELATED APPLICATIONS**

This application claims priority to a Chinese patent application with application number 202310565790.7, titled "SEPARATOR, SECONDARY BATTERY, AND ELECTRIC DEVICE", filed to the Patent Office of the People's Republic of China on May 18, 2023, the entire content of the Chinese patent application is incorporated hereby by reference.

**FIELD**

This application relates to the technical field of batteries, and more specifically, to a separator, a secondary battery comprising the separator, and an electric device.

**BACKGROUND**

The separator is one of the important components in batteries, which has the function of isolating the positive and negative electrodes and allowing ions to pass through. Therefore, the separator performance of batteries to some extent determines the safety performance of the batteries.

Currently, polyolefin dry and wet films are the most widely used separators for lithium ion batteries in the market, which have absolute advantages in manufacturing processes and costs. However, the growing demand for higher energy density and safety limits the application of polyolefin based separators in the advanced lithium ion batteries. This is because, on the one hand, the hydrophobic properties of polyolefin result in its low affinity with carbonate electrolytes. On the other hand, the polyolefin films (such as PP and PE) undergo severe shrinkage when heated due to their low melting point and glass transition temperature, which can easily cause contact short circuits between the positive and negative electrodes, leading to safety accidents. Meanwhile, the macroporous polyolefin skeleton cannot guarantee the uniform deposition of lithium ions on the surface of anode, resulting in uncontrolled growth of dendritic lithium.

At present, the commercial ceramic separators still suffer from poor heat resistance, the separators undergo severe shrinkage at relatively high temperatures, which cannot effectively improve the safety performance of battery cells. In addition, baking the wound battery cells to remove moisture is a common process in battery cell manufacturing, and significant thermal shrinkage can also affect the consistency of battery cell production. Therefore, separators with high heat resistance are crucial for battery performance.

Therefore, it is necessary to provide a separator with high thermal stability.

**SUMMARY**

The purpose of this application is to provide a separator with high thermal stability targeting the deficiency of poor heat resistance of battery separators in existing technology.

According to a first aspect of this application, a separator is provided, the separator comprises a base film; and the base film comprises nanocellulose. When the separator is heated from an initial temperature T0 to T1 at a heating rate of 5-10°C/min, the porosity P of the separator satisfies: $(P0-P1)/P0 \leq 5\%$, wherein $30°C \leq T1-T0 \leq 60°C$, $80°C \leq T0 \leq 100°C$, P0 is the porosity of the separator at T0, and P1 is the porosity of the separator at T1.

Optionally, the separator has several through-hole structures, and the distribution of the through-hole structures satisfies that: the through-holes having a pore size between 40 nm and 60 nm account for 40-70%, the through-holes having a pore size of less than 40 nm account for 10-30%, and the through-holes having a pore size of greater than 60 nm account for 5-35%.

Optionally, the fiber diameter of the nanocellulose is 10-500 nm.

Optionally, the thickness of the base film is 9-30 $\mu$m.

Optionally, the surface of the nanocellulose comprises oxygen-containing functional groups, which include at least one of aldehyde, ketone, or carboxylic acid groups.

Optionally, the longitudinal shrinkage rate MD of the separator at 120°C for 2 hours is $\leq 0.4\%$, and the lateral shrinkage rate TD is $\leq 0.1\%$.

Optionally, the elastic modulus of the separator is 60-95 GPa.

Optionally, the longitudinal tensile strength of the separator is $\geq 200$ Mpa, and the lateral tensile strength of the separator is $\geq 250$ Mpa.

According to a second aspect of this application, a secondary battery is provided, which comprises the separator according to the first aspect of this application.

According to a third aspect of this application, an electric device is provided, which comprises the secondary battery according to the second aspect of this application, wherein the secondary battery provides electrical energy to the electric device.

The technical solution adopted in this application can achieve the following beneficial effects:

the separator provided in this application has high thermal stability and is not prone to shrinkage or deformation when heated, thereby improving the safety performance of the batteries.

## BRIEF DESCRIPTION OF DRAWINGS

The accompanying drawings described herein are intended to provide further understanding of this application and constitute a part of this application. The illustrative embodiments and their descriptions of this application are used to explain this application and do not constitute improper limitation to this application. In the accompanying drawings:

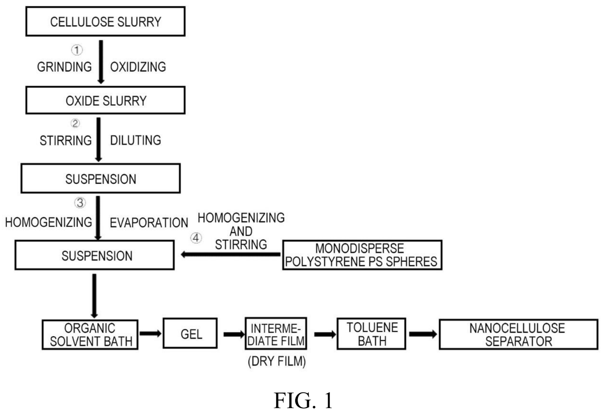

Figure 1 is a flowchart of the preparation process of the separator according to Embodiment 12 of this application.

## DETAILED DESCRIPTION

In order to more clearly illustrate the objects, technical solutions, and advantages of this application, the technical solutions of this application will be clearly and completely described below in conjunction with the specific embodiments of this application and the corresponding drawings. Obviously, the described embodiments are only part of embodiments of this application rather than all of them. Based on embodiments in this application, all other embodiments obtained by those ordinarily skilled in the art without creative work belong to the scope of protection of this application.

According to one embodiment of this application, a separator is provided, the separator can comprise a base film, and the base film can comprise nanocellulose. When the separator is heated from an initial temperature $T0$ to temperature $T1$ at a heating rate of 5-10°C/min, the porosity $P$ of the separator satisfies the following conditions: $(P0-P1)/P0 \leq 5\%$, wherein $30°C \leq T1-T0 \leq 60°C$, $80°C \leq T0 \leq 100°C$, $P0$ is the porosity of the separator at $T0$, and $P1$ is the porosity of the separator at $T1$. For example, the initial temperature $T0$ can be 90°C, 85°C, 90°C, 95°C, 100°C or any temperature value between the above temperature values; and the temperature difference between $T1$ and $T0$ can be 30°C, 35°C, 40°C, 45°C, 50°C, 55°C, 60°C or any temperature value between the above temperature values. Higher temperatures can damage the structure of the separator to a certain extent, causing the pores of the separator to shrink. However, the separator provided in this application remains its porosity substantially unchanged or changes very little after raising its initial temperature of a higher temperature of 80-100°C by 30-60°C at a specific heating rate. For example, when the separator provided in this application is heated from 90°C to 150°C, the porosity of the separator changes by less than 5%, indicating that the separator provided in this application is resistant to high temperatures and will not undergo severe shrinkage even at high temperatures, and can maintain its mechanical integrity even at high temperatures, which has high thermal stability. Such higher thermal stability is attributed to the fine nanostructure of nanocellulose, which forms a relatively dense network structure with each other. At the same time, its good mechanical properties can remain the pore structure substantially unchanged at high temperatures.

Among them, the fiber diameter of the nanocellulose can range from 10 nm to 500 nm. The thickness of the base film can range from 9 $\mu$m to 30 $\mu$m, for example, it can be 9 $\mu$m, 10 $\mu$m, 12 $\mu$m, 14 $\mu$m, 16 $\mu$m, 18 $\mu$m, 20 $\mu$m, 22 $\mu$m, 24 $\mu$m, 25 $\mu$m, 26 $\mu$m, 28 $\mu$m, 30 $\mu$m or any value between the above values. Cellulose is directly extracted from plants and has the advantages of biodegradability, good heat resistance, and sustainable development, making it a promising candidate for separators of lithium ion batteries. Moreover, there is a high affinity between the cellulose skeleton and the electrolyte due to the polymerized glucose units in cellulose. More importantly, the diameter of cellulose can be adjusted from micrometer to nanometer scale using physical or chemical methods. The nanocellulose of the above-mentioned specific size selected in this application has a nanoscale diameter and high crystallinity, which can provide significant mechanical properties and thermal stability.

In this embodiment, the separator has a through-hole structure with a relatively uniform pore size distribution. For example, the distribution of the through-hole structures satisfies that: the through-holes having a pore size between 40 nm and 60 nm account for 40-70%, the through-holes having a pore size of less than 40 nm account for 10-30%, and the through-holes having a pore size of greater than 60 nm account for 5-35%. Preferably, the through-holes having a pore size within 20-40 nm and excluding 40 nm account for 10-30%, and the through-holes having a pore size within 60-140 nm and excluding 60 nm account for 5-35%. The through-hole structure can build a bridge for the rapid migration of ions (e.g., lithium ions) in the electrolyte, allowing ions to migrate within the through-hole structure, so that the formed separator of battery has high ionic conductivity. A suitable through-hole structure can allow electrolyte ions (e.g., lithium ions) to freely pass through more smoothly, forming a charge and discharge circuit, which can effectively avoid the accelerating of the self-discharge process of the battery, avoiding the reduce in consistency of battery, and a suitable pore size distribution can reduce the infiltration time for the electrolyte, improving the wettability of the separator. Therefore, the separator with the above-mentioned through-hole size distribution provided in this application can achieve excellent ionic conductivity and wettability.

In one embodiment of this application, the liquid absorption rate of the separator is 152% to 216%, for example, it can be 152%, 160%, 186%, 190%, 200%, 211%, and 216% or a range value between the above two. In another embodiment of this application, the liquid retention capacity of the separator is 12 g to 21.1g, for example, it can be 12g, 13g, 15g, 18g, 20g, and 21.1g or a range value between the above two. Among them, the liquid retention capacity represents the maximum mass of electrolyte that can be absorbed per 25 cm2 of separator. The liquid absorption rate and liquid retention rate of the separator both can reflect the wetting performance of the separator. The liquid absorption rate and liquid retention capacity of the separator in this application are within the above range, indicating that the separator in this application has excellent wetting performance, when it is applied to batteries, it can improve the dynamic performance of the batteries.

In one embodiment of this application, the ionic conductivity of the separator is 1.0 to 1.4 mS/cm, for example, it can be 1.0 mS/cm, 1.05 mS/cm, 1.12 mS/cm, 1.2 mS/cm, 1.28 mS/cm, 1.3 mS/cm, 1.35 mS/cm, and 1.4 mS/cm or a range value between the above two. When the ionic conductivity of the separator is within the above range, the lithium ions in the electrolyte can smoothly shuttle through the separator, resulting in better lithium ion transport efficiency.

The provided separator can have a porosity of 30% to 80% at room temperature (25 $\pm$ 5°C). In other embodiments, the separator can have a porosity of one of 30%, 40%, 55%, 60%, and 80% or a range value between the above two at room temperature. The porosity within the above range can endow the separator with high liquid absorption rate, which can form a good interface structure between the separator and the positive and negative electrodes, improving the cycle life of the battery, and can also enhance the wettability of the separator to the electrolyte, improving the air permeability and ionic conductivity of the separator.

Among them, the surface of the nanocellulose can comprise oxygen-containing functional groups, which can include at least one of aldehyde, ketone, or carboxylic acid groups. The oxygen-containing functional groups such as aldehyde, ketone, or carboxylic acid, etc., can form complexes with some functional groups in the organic electrolytes, which can be subjected to one-step carbonization to obtain the carbonaceous oxide composite materials, thereby improving the wettability of the electrolyte to the separator. Therefore, the presence of the oxygen-containing functional groups can enhance the ionic conductivity and permeability of the separator.

The separator provided in this application has a low thermal shrinkage rate. Specifically, the longitudinal shrinkage rate MD of the separator at 120°C for 2 hours is $\leq$ 0.4%, and the lateral shrinkage rate TD is $\leq$ 0.1%.

The separator provided in this application has superior mechanical strength, wherein the elastic modulus of the separator (the elastic modulus is obtained by dividing the stress in a uniaxial stressed state by the strain in that direction) can be in the range of 60-95 GPa; and the longitudinal tensile strength of the separator can be $\geq$ 200 Mpa, and the lateral tensile strength of the separator can be $\geq$ 250 Mpa.

The separator provided by the above embodiments has excellent thermal shrinkage resistance, good wettability of electrolyte, and high liquid absorption rate, which can effectively prevent short circuit accidents caused by positive and negative electrode contact due to the thermal shrinkage of separator; and high liquid absorption rate can form a good interface structure between the separator and the positive and negative electrodes, improving the cycle life of the battery.

According to another embodiment of this application, a method for preparing the above-mentioned separator is provided, comprising:

a) homogenizing the cellulose slurry sequentially to obtain a nanocellulose suspension;
b) adding microspheres to the nanocellulose suspension to prepare a homogeneous mixed solution containing the microspheres, and transferring same to a mold to prepare an intermediate film; and
c) placing the intermediate film in an organic solvent to dissolve the microspheres and drying same to obtain the above-mentioned separator.

In the preparation steps of the separator, the specific parameters are as follows:

in step a), the solid content of the cellulose slurry can be 5-20%. Before the homogenization treatment step of the cellulose slurry, it can include grinding the cellulose slurry, which can be carried out using a PFI slurrying machine at a rotate speed of 1500-30000 rpm; preferably, after grinding the cellulose slurry, an oxidation treatment step of the ground cellulose slurry can be further included. Specifically, the oxidation of the cellulose slurry comprises: adding an oxidant to the cellulose slurry, wherein the oxidant can be selected from one or more of 2,2,6,6-tetramethylpiperidine-1-oxide radical oxidation system, sodium bromate, nitric acid, phosphoric acid, and hypochlorous acid or a combination thereof; the concentration (solid content) of the nanocellulose suspension finally obtained in this step is 1-10%; among them, the purpose of oxidation in this step is that the cellulose is mainly formed by the polymerization of polysaccharides, which contain multiple hydroxyl groups, and hydrogen bonds are formed between the hydroxyl groups, the more the hydrogen bonds are formed, the greater the binding force between the cellulose molecules; the above oxidation treatment can oxidize the hydroxyl groups in the cellulose glucose into carboxyl, aldehyde or ketone groups, which can weaken the intermolecular forces and facilitate the subsequent processing, such as intercalation and deintercalation of monodisperse colloids. At the same time, the above mentioned oxygen-containing functional groups such as aldehyde, ketone, or carboxylic acid groups, etc., can form complexes with some functional groups in the organic electrolytes, which can be subjected to one-step carbonization to obtain the carbonaceous oxide composite materials, thereby improving the wettability of the electrolyte to the separator.

In this step, the homogenization treatment is carried out using a homogenizer.

The microspheres in step b) can be made of low heat-resistant polymers, so that in step c), the microspheres can be selectively dissolved at lower temperatures to form a separator with a through-hole structure. By using low heat-resistant polymers as a pore forming method, the controllable porosity of the separator can be achieved.

Specifically, the microspheres in step b) can be monodisperse polystyrene (PS) colloids with a particle size of PS spheres of 40-200 nm. By adjusting the size and quantity of the polystyrene spheres, the pore size and porosity of the finally produced through-hole structure of the separator can be adjusted; and the monodisperse colloids and the nanocellulose suspension can be mixed in a mass ratio of 1:9-3:2 of the polystyrene (PS) monodisperse colloid to the nanocellulose solid in the nanocellulose suspension.

Preferably, before transferring the homogeneous mixed solution containing the microspheres into the mold, a step of suctioning the homogeneous mixed solution can be included, wherein the purpose of suctioning the homogeneous mixed solution is to remove the bubbles from the mixed solution, for example, the homogeneous mixed solution can be vacuum suctioned for 30 minutes to remove the bubbles from the mixed solution, and the homogeneous mixed solution after removing bubbles can be cast into a glass model for solidification, dehydration, and drying so as to form an intermediate film.

Among them, the dehydration and drying can be carried out in the following ways:

**the** solidified sample is transferred to an ethanol bath for dehydration for 12 hours so as to obtain a mechanically stable gel. Then the gel is baked in the oven for a certain time, for example, baked at 40-60°C for 4-8 hours to produce a dry film as an intermediate film. In this step, dehydration with an organic solvent and drying in an oven after dehydration can make the polystyrene spheres more tightly bound to the cellulose molecules, which is beneficial for forming a separator with controllable porosity by dissolving the polystyrene spheres in subsequent steps. Here, it is worth mentioning that the ethanol bath can also alleviate the capillary action between the cellulose fibers during the drying process, thereby forming a loose cellulose network and promoting the migration of electrolyte ions.

The organic solvent in step c) can be selected from at least one of toluene and xylene. Those skilled in the art should understand that any organic solvent that can selectively dissolve the above microspheres without dissolving the separator can be selected. Low heat-resistant polymer styrene microspheres can form a certain size of through-hole structure in the separator due to their solubility in an organic solvent.

Specifically, in step c), the intermediate film obtained in step b) can be soaked in a toluene bath at room temperature to dissolve the polystyrene spheres embedded in the nanocellulose network. Finally, the film sample is oven dried at 40-60°C and then taken out. It is worth mentioning that this application adopts the monodisperse polystyrene (PS) spheres, mainly due to the following factors: (1) the PS spheres can be uniformly dispersed in water and can be uniformly embedded into the nanocellulose host after stirring. (2) the PS spheres can be quickly dissolved in toluene or xylene, leaving a large number of micropores in the cellulose network, thereby obtaining a higher porosity and improving the liquid absorption and liquid retention performance of the separator. This can effectively enhance the integrity of the separator and the positive and negative electrode interfaces in the battery, thereby improving the cycle life of the battery.

Therefore, this application provides a separator with adjustable pore size and porosity, mainly composed of nanocellulose and prepared through pore engineering. The separator has high mechanical strength and can withstand the piercing of lithium dendrites and external impact, thereby improving the safety performance of the battery. The obtained uniform pores are mostly nanopores, which are conducive to the uniform evolution of the electrode-electrolyte interface, improving the speed and absorption capacity of electrolyte by the separator, and enhancing the wettability of the separator to the electrolyte, improving the gas permeability and ionic conductivity of the separator.

According to another embodiment of this application, a secondary battery is provided, which comprises the above-mentioned separator. The separator provided in this application has high mechanical strength and can withstand the piercing of lithium dendrites and external impact. At the same time, it has high thermal stability and is not prone to shrinkage or deformation when heated, thereby improving the safety performance of the separator and thus enhancing the service life and safety performance of the secondary batteries.

Specifically, the secondary battery can be a lithium ion battery.

It will be illustrated below through the specific Embodiments.

Embodiment 1:

A separator is provided, and the preparation process of the separator is as follows:

(a) the coniferous wood plant fibers were used as raw materials, and 200.0 g of the coniferous wood cellulose slurry was weighed, wherein the solid content of the cellulose was 10%, and it was ground using a PFI slurrying machine at a rotate speed of 30000 rpm until the cellulose slurry showed a clearly crushed state. Then, 500.0 g of deionized water was added and magnetically stirred for 30 minutes to dilute the cellulose slurry into a 1% suspension. The suspension was subjected to 12 stages of homogenizers to obtain a viscous nanocellulose suspension with a solid content of 1%. Finally, the concentration of the nanocellulose suspension was increased from 1% to 2% using rotary evaporation technology.

(b) 30.0 g of polystyrene (PS) monodisperse colloid with a diameter of 40-200 nm and the prepared nanocellulose suspension were uniformly mixed in a mass ratio of 3:2 of the polystyrene (PS) monodisperse colloid to the nanocellulose solid in the nanocellulose suspension. The mixture was stirred for 1 hour to obtain a uniform dispersion, which was vacuum suctioned for 30 minutes to remove the bubbles, and then uniformly cast into a glass model. Then, the sample was transferred to an ethanol bath for dehydration for 12 hours to obtain a mechanically stable gel, which was baked in an oven at 50°C for 5 hours to produce a dry film as an intermediate film.

(c) Then, the obtained film sample was soaked in a toluene bath for 5 hours to dissolve the PS spheres embedded in the nanocellulose network. Finally, the film sample was oven dried in an oven at 50°C for 12 hours and then taken out to obtain the separator.

Embodiment 2:

A separator is provided, and the preparation process of the separator is as follows:
The preparation method of the separator was the same as that in Embodiment 1, only except that in step b), the mass ratio of the polystyrene (PS) monodisperse colloid to the nanocellulose solid in the nanocellulose suspension was 5:5.

Embodiment 3:

A separator is provided, and the preparation process of the separator is as follows:
The preparation method of the separator was the same as that in Embodiment 1, only except that in step b), the mass ratio of the polystyrene (PS) monodisperse colloid to the nanocellulose solid in the nanocellulose suspension was 4.5:5.5.

Embodiment 4:

A separator is provided, and the preparation process of the separator is as follows:
The preparation method of the separator was the same as that in Embodiment 1, only except that in step b), the mass ratio of the polystyrene (PS) monodisperse colloid to the nanocellulose solid in the nanocellulose suspension was 1:9.

Embodiment 5:

A separator is provided, and the preparation process of the separator is as follows:
The preparation method of the separator was the same as that in Embodiment 1, only except that in step b), the mass ratio of the polystyrene (PS) monodisperse colloid to the nanocellulose solid in the nanocellulose suspension was 1:12.

Embodiment 6:

A separator is provided, and the preparation process of the separator is as follows:
The preparation method of the separator was the same as that in Embodiment 1, only except that in step b), the mass ratio of the polystyrene (PS) monodisperse colloid to the nanocellulose solid in the nanocellulose suspension was 4:2 .

Embodiment 7:

A separator is provided, and the preparation process of the separator is as follows:
The preparation method of the separator was the same as that in Embodiment 1, only except that in step b), the slurry was ground using a PFI slurrying machine at a rotate speed of 25000 rpm.

Embodiment 8:

A separator is provided, and the preparation process of the separator is as follows:
The preparation method of the separator was the same as that in Embodiment 1, only except that in step b), the slurry was ground using a PFI slurrying machine at a rotate speed of 20000 rpm.

Embodiment 9:

A separator is provided, and the preparation process of the separator is as follows:
The preparation method of the separator was the same as that in Embodiment 1, only except that in step b), the slurry was ground using a PFI slurrying machine at a rotate speed of 15000 rpm.

Embodiment 10:

A separator is provided, and the preparation process of the separator is as follows:
The preparation method of the separator was the same as that in Embodiment 1, only except that in step b), the slurry was ground using a PFI slurrying machine at a rotate speed of 10000 rpm.

Embodiment 11:

A separator is provided, and the preparation process of the separator is as follows:
The preparation method of the separator was the same as that in Embodiment 1, only except that in step b), the slurry was ground using a PFI slurrying machine at a rotate speed of 5000 rpm.

Embodiment 12:

A separator is provided, and the preparation process of the separator is as follows:
The preparation method of the separator was the same as that in Embodiment 1, only except that in step a), after the cellulose slurry was ground using a PFI slurrying machine, it was pre-treated with 10.0 g of TEMPO oxidant with a NaClO concentration of 10 mmol/g to obtain a TEMPO oxidized slurry, then 500.0 g of deionized water was added and magnetically stirred for 30 minutes to dilute the oxidized slurry into a 1% suspension. The specific preparation method is shown in Figure 1.

Embodiment 13:

A separator is provided, and the preparation process of the separator is as follows:
The preparation method of the separator was the same as that in Embodiment 12, only except that in step a), the NaClO concentration in the TEMPO oxidant was 8 mmol/g.

Embodiment 14:

A separator is provided, and the preparation process of the separator is as follows:
The preparation method of the separator was the same as that in Embodiment 12, only except that in step a), the NaClO concentration in the TEMPO oxidant was 6 mmol/g.

Embodiment 15:

A separator is provided, and the preparation process of the separator is as follows:
The preparation method of the separator was the same as that in Embodiment 12, only except that in step a), the NaClO concentration in the TEMPO oxidant was 4 mmol/g.

Embodiment 16:

A separator is provided, and the preparation process of the separator is as follows:
The preparation method of the separator was the same as that in Embodiment 12, only except that in step a), the NaClO concentration in the TEMPO oxidant was 2 mmol/g.

Embodiment 17:

A separator is provided, and the preparation process of the separator is as follows:
The preparation method of the separator was the same as that in Embodiment 12, only except that in step a), the NaClO concentration in the TEMPO oxidant was 1 mmol/g.

Embodiment 18:

A separator is provided, and the preparation process of the separator is as follows:
The preparation method of the separator was the same as that in Embodiment 12, only except that in step a), the oxidant was sodium bromate.

Embodiment 19:

A separator is provided, and the preparation process of the separator is as follows:
The preparation method of the separator was the same as that in Embodiment 12, only except that in step a), the oxidant was nitric acid.

Embodiment 20:

A separator is provided, and the preparation process of the separator is as follows:
The preparation method of the separator was the same as that in Embodiment 12, only except that in step a), the oxidant was phosphoric acid.

Comparative Example 1

The nanocellulose suspension prepared by the process in Embodiment 1 was used, and the suspension was subjected to 12 homogenizers to obtain a viscous nanocellulose suspension with a solid content of 1%. Finally, the concentration of the nanocellulose suspension was increased from 1% to 2% using rotary evaporation technology. The suspension was vacuum suctioned for 30 minutes to remove the bubbles, and then uniformly cast into a glass model. Then, the sample was transferred to an ethanol bath for dehydration for 12 hours to obtain the mechanically stable gel. The gel was stored in an oven at 50°C for 12 hours, and then taken out to obtain the separator.

Comparative Example 2

The polypropylene separator was purchased from Shenzhen Zhongxing Innovative Material Technologies Co., LTD., and had a thickness of 25 $\mu$m.

Comparative Example 3

The polyethylene separator was purchased from Shenzhen Zhongxing Innovative Material Technologies Co., LTD., and had a thickness of 25 $\mu$m.

Performance Testing:

1) Measurement of Porosity

After the initial mass Wm of the separators in Embodiments and Comparative Examples was recorded, respectively, the separators were soaked in n-butanol for 1 hour, then taken out and the liquid on surface was removed with filter paper, and the mass Ws was weighed to obtain the porosity $\varepsilon$:

$$|\varepsilon=[(Ws-Wb)/\rho b]/[(Ws-Wb)/\rho b+Wm/\rho m]$$

Wm and Ws represented the weights of the dry film and the film soaked in n-butanol for 1 hour, respectively; and Wb was the original mass of n-butanol. $\rho$b and $\rho$m were the density of n-butanol and the density of the dry film, respectively. The measurement results at room temperature are shown in Table 1.

2) Thermal stability

In order to further test the thermal stability of the separator, the changes in porosity of separators in Embodiments and Comparative Examples at high temperatures were also measured. The specific measurement method was:
The separators were heated to the set temperatures, then cooled down to room temperature and then the porosity at each temperature was measured using the same method as described above. Among them, the initial temperature T0 could be set to 90°C, and the porosity of the separator at T0 was defined as P0. Then, the separator was heated at a heating rate of 5-10°C/min until it reached T1 (30°C ≤ T1-T0 ≤ 60°C), and then the porosity P1 of the separator was measured. Among them, T1 was taken as 120°C, 135°C, and 150°C, respectively. The measurement results of porosity of separators in Embodiments and Comparative Examples at high temperatures are shown in Table 1, respectively.

3) Pore size distribution

The size and distribution of through-holes in Embodiments and Comparative Examples were measured with the following methods:

(1) The through-holes of the separators to be tested were fully filled and wet with liquid, and positive pressure was formed inside the holes due to capillary phenomenon.
(2) The separators were placed into a sealed tank and gas pressure was applied to squeeze the liquid out of the capillary through-holes.
(3) According to the relative relationship between the pressure applied when the liquid in a single through-hole was completely squeezed out of the capillary through-hole and the through-hole diameter, the pore size of the separator can be obtained according to the Laplace equation. The Laplace equation is as follows: $d = -(4\gamma Cos\theta/ p) \times 100\%$, where d is the through-hole diameter, P is the pressure, $\gamma$ is the surface tension of the liquid, and $\theta$ is the contact angle between the separator and the liquid. At different pressures, the liquid in the separator will be gradually squeezed out and generate a certain gas penetration flow rate. The pore size and pore size distribution can be calculated based on the relationship between pressure and changes in flow rate. The results are shown in Table 1.
4) Diameter of Cellulose

The diameter of nanocellulose of the separators in Embodiments and Comparative Examples was measured. The specific method included subjecting the separator sample to gold spraying treatment for 100 seconds, and confirming its cross-sectional morphology through scanning electron microscopy, wherein negative staining method was used to dilute the nanocellulose suspension, and high-resolution transmission electron microscopy images of the nanofiber morphology was obtained. The results are shown in Table 2.

5) Thermal shrinkage

The thermal shrinkage performance of the separators in Embodiments and Comparative Examples was tested using an Electric Thermostatic Blast Drying Oven. The specific testing method was as follows:
the separators were folded into three stacks, folded flat, and the air between the separators was expelled; a sample cutting board (140×70 mm) was taken and cut out the samples of separator, the length A1 and width B1 of the separator were measured; the temperature of oven was set to 100°C, and after the temperature was stabilized at 100°C, the sample was placed in the oven and held for 2 hours. A second chronograph was used for timing or the timer provided with the oven was directly used for timing; after 2 hours, the separator was taken out, and cooled down for 10 minutes, then the length A2 and width B2 of the sample were measured.

$$\text{Longitudinal thermal shrinkage of separator} = (A1-A2)/A1 \times 100\%$$

$$|\text{Lateral thermal shrinkage of separator} = (B1-B2)/B1 \times 100\%$$

The longitudinal and lateral thermal shrinkage of the separator at 100°C for 2 hours were calculated according to the above formula, respectively.
The above method was repeated, and the temperatures of oven were set to 120°C and 190°C, respectively, and the longitudinal and lateral thermal shrinkages at 120°C and 190°C for 2 hours were measured, respectively. The test results are shown in Table 2.

6) Liquid absorption rate and liquid retention capacity

Specific testing method: the separators in Embodiments and Comparative Examples were cut into samples of 5 cm × 5 cm, and weighed as W1, then the samples were placed in the electrolyte for 10 minutes at room temperature, taken out, the electrolyte on the surface of the separators was absorbed to dryness with filter paper, then weighed as W2, the liquid absorption rate=(W2-W1)/W1×100%, the above procedures were repeated 5 times and the average value was taken. Wherein, the electrolyte was a solution of LiPF$_6$ with a concentration of 1 mol/L, and the solvent composition of the solution was dimethyl carbonate DMC: ethylene carbonate EC: methyl ethyl carbonate EMC=1:1:1 by volume ratio.

Liquid retention capacity testing method: the separators were cut into samples of 5 cm × 5 cm, and weighed as W1, then the samples were placed in the electrolyte, and weighed every one hour, and recorded as Wt when the weight remained unchanged, the liquid retention capacity=Wt - W1.

The test results of liquid absorption rate and battery liquid retention capacity of the separators in Embodiments and Comparative Examples are shown in Table 3.

7) Mechanical properties

The tensile strength and elastic modulus tests were carried out on the separator using the following testing methods:

the thickness of the separator was measured with a thickness gauge and recorded as A (see Table 2 for the thickness data of the separators), the separator was folded and placed between A4 papers, then it was placed on a sample cutting board and cut into a strip sample with a width of 15 mm along the winding direction of the separator, then a marking line was drawn at a spacing of 10 cm on the top of the strip separator, and then the separator was clamped on the universal tester and input parameters A, width (15 mm), and gauge length (100 mm), then measurement was started. After the separator was pulled apart, it will show the longitudinal tensile strength, longitudinal elongation rate, and longitudinal elastic modulus. The test results are shown in Table 3.

The thickness of the separator was measured with a thickness gauge and recorded as A, the separator was folded and placed between A4 papers, then it was placed on a sample cutting board and cut into a strip sample with a width of 15 mm perpendicular to the winding direction of the separator, then a marking line was drawn at a spacing of 10 cm on the top of the strip separator, and then the separator was clamped on the universal tester and input parameters A, width (15 mm), and gauge length (100 mm), etc., then measurement was started. After the separator was pulled apart, it will show the lateral tensile strength, lateral elongation rate, and lateral elastic modulus. The test results are shown in Table 3.

8) Ionic conductivity

By using symmetrical battery fabrication, the electrochemical impedance spectroscopy (EIS) of the battery sample was detected using an electrochemical workstation, with a frequency of 0.1 MHz to 0.1 Hz and an amplitude of 10 mV. The specific formula was:

$$|\sigma=L/AR;$$

L (cm) was the thickness of the separator, A (cm$^2$) was the area of the stainless steel electrode, and R was the resistance obtained through the curve. The test results are shown in Table 4.

9) Testing of short-circuit performance and cycle performance of lithium ion batteries.

According to the above battery preparation method, the separators prepared in Embodiments 1-20 and Comparative Examples 1-3 were further assembled into batteries. Then, the short-circuit performance and cycle performance of the batteries were tested using a battery detection system, respectively, wherein the short-circuit performance testing process of the batteries was as follows: the batteries were fully charged to 4.3V and placed in an environment of 20 ± 5°C. When the surface temperature of the batteries reached 20 ± 5°C, maintained for another 30 minutes. A wire with an internal resistance of 3mΩ was used to connect the positive and negative electrodes of the battery for short-circuit for 10 minutes. After the test was completed, the surface temperature of the battery was collected and observed for 1 hour at ambient temperature to see if there was an explosion or fire; the process of cycle performance testing was as follows: at 25°C, the battery was laid aside for 5 minutes, then charged at a constant current rate of 1C to 4.1V, then charged at a constant voltage until the current was less than or equal to 0.05C, then laid aside for 5 minutes, and then discharged at a constant current rate of 1C to 2.8V, which was one charge-discharge cycle, and the discharge capacity of this cycle was recorded as the discharge capacity at the first cycle of the lithium ion secondary battery. The lithium ion secondary battery was cyclic charged and discharged for 900 cycles according to the above method, the discharge capacity at 900 cycles was recorded, and the capacity retention rate (%)=discharge capacity at the 900th cycle/discharge capacity at the 1st cycle × 100%.

The test results are shown in Table 4. Among them, the assembly process of lithium ion batteries was as follows:

a. Preparation of Negative Electrode Sheets for Lithium Ion Batteries

The negative electrode active material graphite, conductive agent superconducting carbon (SP), dispersant sodium carboxymethyl cellulose (CMC), and binder (SBR) were mixed into a uniform slurry in deionized water in a ratio of 96:1:1:2. The prepared negative electrode slurry was coated on both sides of the copper foil and then dried by baking at 85°C. The coated electrode sheet was further cold pressed, divided into strips, and cut into sheets. After cutting into sheets, the electrode sheet was dried at 90°C for 4 hours to obtain the negative electrode sheet for lithium ion batteries.

b. Preparation of Positive Electrode Sheets for Lithium Ion Batteries

The positive electrode active material nickel cobalt manganese ternary material (NCM622), conductive agent (SP), and binder PVDF were mixed and stirred in N-methylpyrrolidone (NMP) in a mass ratio of 98:1:1 to form a positive electrode slurry with a certain viscosity. The prepared slurry was uniformly coated on both sides of the aluminum foil and then dried by baking at 110°C. The coated electrode sheet was further cold pressed, divided into strips, and cut into sheets. After cutting into sheets, the electrode sheet was dried at 100°C for 2 hours to obtain the positive electrode sheet.

c. Preparation of Electrolyte For Lithium Ion Batteries

Lithium hexafluorophosphate electrolyte was dissolved in a mixed solvent of ethylene carbonate, dimethyl carbonate, and methyl ethyl carbonate in a volume ratio of 1:1.5:1 to obtain the electrolyte for lithium ion battery.

d. Assembly of Lithium Ion Battery

The prepared positive electrode sheet, the above separator, and the negative electrode sheet were wound into a bare battery cell; after the bare battery cell was subjected to hot pressing shaping and tab trimming, the positive electrode was welded with aluminum tabs, while the negative electrode was welded with nickel-clad copper tabs; finally, the welded battery cells were placed in aluminum-plastic packaging bags and encapsulated, the electrolyte prepared above was injected, and then subjected to processes of encapsulation, formation, and capacity grading, etc., to produce the lithium ion batteries.

The performance test results are shown in Tables 1-4 below, where Ex represents the Embodiments and CEx represents the Comparative Examples:

Table 1

| | Porosity at room temperature | Pore size distribution of through-hole structure | | | Porosities at different temperatures | | | |
| --- | --- | --- | --- | --- | --- | --- | --- | --- |
| | | 40-60 nm | <40 nm | >60 nm | 90°C | 120°C | 135°C | 150°C |
| Ex1 | 72% | 70% | 25% | 5% | 70% | 69.1% | 68.5% | 68% |
| Ex2 | 75% | 62% | 19% | 19% | 73% | 72.1% | 71.5% | 70.1% |
| Ex3 | 74% | 55% | 10% | 35% | 73% | 72.1% | 71.5% | 70.5% |
| Ex4 | 71% | 40% | 30% | 30% | 68% | 66.8% | 65.1% | 64.6% |
| Ex5 | 76% | 30% | 10% | 30% | 74.2% | 72.6% | 71.5% | 70.9% |
| Ex6 | 75% | 80% | 12% | 18% | 72.8% | 71.2% | 69.9% | 69.3% |
| Ex7 | 70% | 65% | 25% | 10% | 68.1% | 67.2% | 66.5% | 66.0% |
| Ex8 | 60% | 62% | 26% | 12% | 58.2% | 57.0% | 56.8% | 56.2% |
| Ex9 | 50% | 60% | 26% | 14% | 49% | 48.1% | 47.5% | 47% |
| Ex10 | 35% | 60% | 24% | 16% | 34.1% | 33.4% | 32.9% | 32.5% |
| Ex11 | 30% | 58% | 15% | 27% | 29% | 28.1% | 27.9% | 27.6% |
| Ex12 | 80% | 66% | 21% | 13% | 78.1% | 76.2% | 75.3% | 74.3% |
| Ex13 | 78% | 64% | 18% | 21% | 76.2% | 74.5% | 73.9% | 73.1% |
| Ex14 | 75% | 59% | 20% | 21% | 73.2% | 72.0% | 71.5% | 70.2% |
| Ex15 | 73% | 61% | 19% | 20% | 71.5% | 70.2% | 69.5% | 68.2% |

(continued)

| | Porosity at room temperature | Pore size distribution of through-hole structure | | | Porosities at different temperatures | | | |
|---|---|---|---|---|---|---|---|---|
| | | 40-60 nm | <40 nm | >60 nm | 90°C | 120°C | 135°C | 150°C |
| Ex16 | 72% | 56% | 15% | 29% | 69.7% | 68.2% | 67.5% | 66.6% |
| Ex17 | 70% | 55% | 20% | 25% | 68.1% | 67.1% | 66.6% | 65.2% |
| Ex18 | 78% | 65% | 20% | 15% | 76.1% | 74.8% | 73.6% | 72.9% |
| Ex19 | 77% | 65% | 22% | 13% | 75.2% | 74.1% | 73.6% | 72.2% |
| Ex20 | 75% | 64% | 19% | 20% | 73.1% | 71.8% | 70.2% | 69.6% |
| CEx1 | 20% | 20% | 41% | 39% | 19.4% | 17.9% | 16.6% | 16.0% |
| CEx2 | 25.2% | 22% | 38% | 40% | 21.6% | 19.6% | 18.8% | 16.7% |
| CEx3 | 23.5% | 19% | 40% | 41% | 20.1% | 18.7% | 17.3% | 15.8% |

Table 2

| | Thermal shrinkage | | | | | | Thickness of base film (μm) | Diameter of cellulose (nm) |
|---|---|---|---|---|---|---|---|---|
| | Shrinkage rate at 100°C for 2h/% | | Shrinkage rate at 120°C for 2h/% | | Shrinkage rate at 190°C for 2h/% | | | |
| | MD | TD | MD | TD | MD | TD | | |
| Ex1 | 0.20 | 0.06 | 0.30 | 0.08 | 1.40 | 0.90 | 30 | 200 |
| Ex2 | 0.21 | 0.06 | 0.30 | 0.08 | 1.30 | 0.62 | 25 | 230 |
| Ex3 | 0.18 | 0.07 | 0.27 | 0.09 | 1.35 | 0.81 | 26 | 220 |
| Ex4 | 0.22 | 0.06 | 0.28 | 0.08 | 1.29 | 0.63 | 30 | 220 |
| Ex5 | 0.23 | 0.07 | 0.25 | 0.09 | 1.25 | 0.55 | 28 | 210 |
| Ex6 | 0.21 | 0.07 | 0.29 | 0.09 | 1.30 | 0.61 | 29 | 240 |
| Ex7 | 0.15 | 0.09 | 0.28 | 0.09 | 1.33 | 0.66 | 27 | 300 |
| Ex8 | 0.18 | 0.07 | 0.26 | 0.08 | 1.23 | 0.61 | 28 | 360 |
| Ex9 | 0.13 | 0.06 | 0.25 | 0.08 | 1.28 | 0.56 | 26 | 410 |
| Ex10 | 0.20 | 0.07 | 0.28 | 0.09 | 1.32 | 0.62 | 30 | 460 |
| Ex11 | 0.16 | 0.06 | 0.29 | 0.08 | 1.28 | 0.58 | 29 | 500 |
| Ex12 | 0.35 | 0.09 | 0.40 | 0.10 | 2.0 | 1.2 | 9 | 10 |
| Ex13 | 0.30 | 0.08 | 0.38 | 0.09 | 1.9 | 1.1 | 11 | 20 |
| Ex14 | 0.28 | 0.08 | 0.36 | 0.09 | 1.8 | 1.08 | 13 | 40 |
| Ex15 | 0.26 | 0.07 | 0.35 | 0.08 | 1.7 | 1.06 | 20 | 50 |
| Ex16 | 0.25 | 0.07 | 0.33 | 0.08 | 1.7 | 1.08 | 22 | 75 |
| Ex17 | 0.23 | 0.07 | 0.32 | 0.08 | 1.6 | 1.0 | 23 | 100 |
| Ex18 | 0.35 | 0.08 | 0.38 | 0.09 | 1.9 | 1.12 | 9 | 20 |
| Ex19 | 0.34 | 0.08 | 0.35 | 0.09 | 1.9 | 1.12 | 9.5 | 25 |
| Ex20 | 0.33 | 0.08 | 0.38 | 0.09 | 1.8 | 1.05 | 10 | 30 |
| CEx1 | 0.40 | 0.09 | 0.5 | 0.2 | 2.2 | 1.4 | 30 | 220 |
| CEx2 | 1.2 | 0.8 | 4 | 2 | / | / | 25 | / |

(continued)

| | Thermal shrinkage | | | | | | Thickness of base film (μm) | Diameter of cellulose (nm) |
| | Shrinkage rate at 100°C for 2h/% | | Shrinkage rate at 120°C for 2h/% | | Shrinkage rate at 190°C for 2h/% | | | |
| | MD | TD | MD | TD | MD | TD | | |
| CEx3 | 1.2 | 0.2 | 5 | 1 | / | / | 25 | / |

Note: The "/" in the thermal shrinkage test result represents a thermal shrinkage of greater than 50%, and the separator is rolled up together, making it impossible to measure the specific shrinkage rate.

Table 3

| | Liquid absorption rate/% | Liquid retention capacity/g | Longitudinal tensile strength (Mpa) | Longitudinal elongation rate | Lateral tensile strength (Mpa) | Lateral elongation rate | Longitudinal elastic modulus/(GPa) | Lateral elastic modulus/(GPa) |
|---|---|---|---|---|---|---|---|---|
| Ex1 | 210 | 19.8 | 230.5 | 132% | 278.2 | 140% | 85 | 87 |
| Ex2 | 202 | 18 | 225.6 | 130% | 277.1 | 138% | 84 | 86 |
| Ex3 | 195 | 17.9 | 223.0 | 129% | 275.2 | 137% | 84 | 86 |
| Ex4 | 180 | 17.1 | 225.1 | 131% | 276.3 | 135% | 83 | 85 |
| Ex5 | 152 | 12 | 220.4 | 128% | 270.4 | 136% | 82 | 85 |
| Ex6 | 155 | 13.1 | 210.1 | 126% | 260.4 | 136% | 82 | 84 |
| Ex7 | 200 | 17.9 | 225.1 | 134% | 265.8 | 137% | 83 | 87 |
| Ex8 | 198 | 17.6 | 220.5 | 132% | 270.5 | 138% | 80 | 85 |
| Ex9 | 198 | 17.5 | 215.3 | 128% | 266.9 | 137% | 75 | 83 |
| Ex10 | 196 | 17.2 | 210.7 | 126% | 260.4 | 136% | 74 | 82 |
| Ex11 | 192 | 17.0 | 200.0 | 125% | 250.0 | 135% | 60 | 68 |
| Ex12 | 216 | 21.1 | 256.3 | 136% | 300.6 | 144% | 95 | 95 |
| Ex13 | 215 | 20.9 | 240.5 | 135% | 290.1 | 143% | 94 | 95 |
| Ex14 | 215 | 20.7 | 235.3 | 134% | 278.9 | 142% | 93 | 94 |
| Ex15 | 213 | 20.5 | 230.6 | 134% | 270.3 | 141% | 93 | 95 |
| Ex16 | 212 | 20.4 | 220.2 | 133% | 260.4 | 141% | 92 | 94 |
| Ex17 | 212 | 20.2 | 210.5 | 126% | 250.8 | 136% | 90 | 93 |
| Ex18 | 215 | 20.6 | 250.2 | 135% | 280.3 | 138% | 94 | 95 |
| Ex19 | 212 | 20.5 | 241.9 | 134% | 290.6 | 139% | 94 | 94 |
| Ex20 | 213 | 20.2 | 248.8 | 132% | 275.3 | 138% | 93 | 94 |
| CEx1 | 152 | 13.0 | 395.6 | 167% | 414.3 | 156% | 55 | 50 |
| CEx2 | 118 | 10.3 | 38.2 | 50% | 150 | 103% | 48 | 46 |
| CEx3 | 110 | 9.4 | 162 | 188% | 140.3 | 164% | 54 | 52 |

Table 4

| | Ionic conductivity/(mS/cm) | Surface temperature of battery/°C | The battery is on fire or not | Capacity retention rate (%) |
|---|---|---|---|---|
| Ex1 | 1.35 | 121 | No | 94% |
| Ex2 | 1.3 | 118 | No | 93% |

(continued)

|       | Ionic conductivity/(mS/cm) | Surface temperature of battery/°C | The battery is on fire or not | Capacity retention rate (%) |
|-------|----------------------------|-----------------------------------|-------------------------------|-----------------------------|
| Ex3   | 1.28                       | 119                               | No                            | 93%                         |
| Ex4   | 1.2                        | 121                               | No                            | 93%                         |
| Ex5   | 1.0                        | 120                               | No                            | 92%                         |
| Ex6   | 1.05                       | 121                               | No                            | 90%                         |
| Ex7   | 1.3                        | 119                               | No                            | 94%                         |
| Ex8   | 1.29                       | 120                               | No                            | 94%                         |
| Ex9   | 1.29                       | 120                               | No                            | 93%                         |
| Ex10  | 1.28                       | 119                               | No                            | 93%                         |
| Ex11  | 1.26                       | 120                               | No                            | 93%                         |
| Ex12  | 1.45                       | 118                               | No                            | 97%                         |
| Ex13  | 1.42                       | 120                               | No                            | 96%                         |
| Ex14  | 1.41                       | 121                               | No                            | 96%                         |
| Ex15  | 1.41                       | 120                               | No                            | 96%                         |
| Ex16  | 1.39                       | 120                               | No                            | 95%                         |
| Ex17  | 1.38                       | 119                               | No                            | 95%                         |
| Ex18  | 1.40                       | 118                               | No                            | 94%                         |
| Ex19  | 1.41                       | 119                               | No                            | 94%                         |
| Ex20  | 1.41                       | 120                               | No                            | 94%                         |
| CEx1  | 0.96                       | 134                               | No                            | 85%                         |
| CEx2  | 0.29                       | > 150                             | Yes                           | 79%                         |
| CEx3  | 0.32                       | > 150                             | Yes                           | 75%                         |

1) In the porosity test, it can be seen from Table 1 that the porosity of the separators provided in Embodiments 1-20 of this application is within the range of 30% to 80% at room temperature. Among them, the porosity of the separator in Embodiment 12 can reach 80% at room temperature, which is much higher than the porosity at room temperature in Comparative Examples 1-3.

2) In the thermal stability test, when the initial temperature T0 was set to 90 °C, the porosity of the separator at T0 was defined as P0. Then, the separator was heated at a heating rate of 5-10°C/min to T1 ($30°C \leq T1-T0 \leq 60°C$, and T1 was taken as 120°C, 135°C, and 150°C respectively), and the porosity P1 of the separator was measured. From Table 1 above, it can be calculated that the change in porosity in Embodiment 1-20 is $2.86\% \leq (P0-P1)/P0 \leq 5\%$; whereas when heating at high temperatures, the change in porosity of the separator in Comparative Examples 1-3 is greater than 5%. It can be seen therefrom that when heating at high temperatures, compared to Comparative Examples 1-3, the change in porosity of the separator provided in this application is $\leq 5\%$, indicating that the separator provided in this application has good heat resistance and high thermal stability.

3) The pore size distribution measurement results of Embodiments 1-6 show that by adjusting the mass ratio of polystyrene monodisperse colloid to nanocellulose solid in nanocellulose suspension, the pore size distribution of the through-hole structure in the separator can be adjusted. When the mass ratio of polystyrene monodisperse colloid to nanocellulose solid in nanocellulose suspension is within the range of 1:9-3:2, the through-hole structure distribution satisfies: the through-holes having a pore size within 40-60 nm account for 40-70%, the through-holes having a pore size of less than 40 nm (specifically, a pore size within 20-40 nm and excluding 40 nm ) account for 10-30%, and the through-holes having a pore size of greater than 60 nm (specifically, a pore size within 60-140 nm and excluding 60 nm ) account for 5-35%, and the distribution of the through-hole structure can make the separator have good wettability and ionic conductivity. When the mass ratio of polystyrene monodisperse colloid to nanocellulose solid in nanocellulose suspension is too large (e.g., 4:2 in Embodiment 6) or too small (e.g., 1:12 in Embodiment 5), the proportion of through-holes having a pore size of 40-60 nm is too large (80%) or too small (30%), which will reduce the wettability and ionic conductivity of the separator instead.

4) From the measurement results of cellulose diameter in Table 2, it can be seen that the nanocellulose diameter of the separators in Embodiments 1-20 is within the range of 10-500 nm, and it can be seen from Embodiments 1 and 7-11 that the larger the rotate speed of the slurrying machine, the smaller the nanocellulose diameter in the prepared separators. Meanwhile, from the measurement results of the thickness of base film in Table 2, it can be seen that the thickness of base film of the separators in Embodiments 1-20 is within the range of 9-30 μm, and according to Embodiments 12-17, it can be seen that as the concentration of the oxidant decreases, the thickness of the separators gradually increases.

5) From the thermal shrinkage test data in Table 2, it can be seen that the thermal shrinkage rates of the separators provided in Embodiments 1-20 of this application are much lower than those of the separators in Comparative Examples 2 and 3. In particular, the longitudinal shrinkage rate MD of the separators in Embodiments 1-20 at 120°C for 2 hours is 0.25% to 0.4%, and the lateral shrinkage rate TD is 0.08% to 0.1%, while the longitudinal shrinkage rate MD of the separators in Comparative Examples 2-3 at 120°C for 2 hours is 4% to 5%, and the lateral shrinkage rate TD is 1% to 2%, indicating that the separators of this application have good thermal shrinkage performance and higher thermal stability.

6) From the test results of liquid absorption rate and liquid retention capacity in Table 3, it can be seen that when compared Embodiments 1-20 with Comparative Examples 1-3, the liquid absorption rate of the separators provided in this application is significantly improved, and the liquid retention capacity is also increased. This indicates that the separators with nano through-hole structure in this application can exhibit excellent affinity to the electrolyte and have excellent liquid absorption and liquid retention properties. Especially, it can be seen from Embodiments 12-17 that when an oxidant is added in the preparation method of the separators, the wettability of the separators is improved to a certain extent compared to other Embodiments (e.g., Embodiments 1-11), and the higher the degree of oxidation, the stronger the wettability of the separators, and correspondingly, the higher the ionic conductivity as well.

7) From the data in Table 3, it can be seen that the longitudinal tensile strength of the separators provided in Embodiments 1-20 of this application is within the range of 200-256.3 MPa, which is higher than the longitudinal tensile strength of Comparative Examples 2-3; and the lateral tensile strength of the separators is within the range of 250-300.6MPa, which is also higher than the lateral tensile strength of Comparative Examples 2-3, indicating that the mechanical strength of the separators provided in this application is relatively high. Meanwhile, the elastic modulus of the separators in Embodiments 1-20 of this application is within the range of 60-95 GPa, which is higher than the elastic modulus of the separators in Comparative Examples 1-3, indicating that the mechanical properties of the separators provided by the preparation method of this application are relatively high.

8) From the ionic conductivity results in Table 4, it can be seen that the ionic conductivity of the separators provided in Embodiments 12-17 of this application is higher than that of the separators in Embodiments 1-11, and much higher than that of Comparative Examples 2-3. This is because in Embodiments 12-17, the oxidant oxidizes the alcohol hydroxyl groups in cellulose polysaccharides into aldehyde, ketone, or carboxyl groups, which further increases the ionic conductivity of the separators.

9) It is shown from the short-circuit performance and cycle performance test results of the batteries in Table 4 that compared with the batteries using the separators of Comparative Examples 1-3, the batteries using the separators prepared in Embodiments 1-20 of this application have significant advantages in preventing short-circuit and outbreak of a fire of batteries. Moreover, the batteries using the separators prepared in Embodiments 1-20 of this application have better cycle performance than the batteries using the separators prepared in Comparative Examples 1-3, indicating that the use of the separators in this application can improve the safety performance of the batteries.

In summary, the separators provided in this application have significant mechanical strength and can withstand the piercing of lithium dendrites and external impact, thereby enhancing the safety performance of the batteries; the separators provided in this application have a uniform through-hole structure, with the majority of the through-hole structure having a pore size concentrated in the range of 40-60 nm. The presence of nano through-hole structures facilitates the uniform evolution of the electrode-electrolyte interface, improves the speed and absorption capacity of electrolyte by the separators, enhancing the wettability of electrolyte, and in turn improving the gas permeability and ionic conductivity of the separators; moreover, the separators provided in this application have a higher porosity, for example, the porosity at room temperature can reach up to 80%. A higher porosity can improve the liquid absorption and liquid retention performance of the separators, and can effectively enhance the integrity of the separators and the positive and negative electrode interfaces in the batteries, and thereby improving the cycle life of the batteries. Moreover, the prepared separator is used for the fabrication of lithium ion batteries, which significantly improves the interface stability and cycle life, etc., of the battery under high current density.

The previous embodiments in this application focus on the description of differences among embodiments. As long as the different optimization features among embodiments are not contradictory, they can be combined to form more preferred embodiments. Considering the conciseness of the writing, they will not be repeated here.

The above contents are only embodiments of this application and are not intended to limit thereto. For those skilled in the art, this application may have various modifications and variations. Any modifications, equivalent substitutions, and improvements, etc. made within the spirit and principles of this application shall be included within the scope of the claims of this application.

## Claims

1. A separator, comprising a base film, and the base film comprises nanocellulose, wherein when the separator is heated from an initial temperature T0 to T1 at a heating rate of 5-10°C/min, a porosity P of the separator satisfies: (P0-P1)/P0≤5%; wherein 30°C≤T1-T0≤60°C, 80°C≤T0≤100°C, P0 is the porosity of the separator at T0, and P1 is the porosity of the separator at T1.

2. The separator of claim 1, wherein the separator has a through-hole structure, and a distribution of the through-hole structure satisfies that: the through-holes having a pore size between 40 nm and 60 nm account for 40-70%, the through-holes having a pore size of less than 40 nm account for 10-30%, and the through-holes having a pore size of greater than 60 nm account for 5-35%.

3. The separator of claim 1, wherein a fiber diameter of the nanocellulose is 10-500 nm.

4. The separator of claim 3, wherein a thickness of the base film is 9-30 $\mu$m.

5. The separator of claim 4, wherein a surface of the nanocellulose comprises oxygen-containing functional groups, which comprise at least one of aldehyde, ketone, or carboxylic acid groups.

6. The separator of any one of claims 1 to 5, wherein a longitudinal shrinkage rate MD of the separator at 120°C for 2 hours is ≤ 0.4%, and a lateral shrinkage rate TD is ≤ 0.1%.

7. The separator of any one of claims 1 to 5, wherein an elastic modulus of the separator is 60-95 GPa.

8. The separator of any one of claims 1 to 5, wherein a longitudinal tensile strength of the separator is ≥ 200 Mpa, and a lateral tensile strength of the separator is ≥ 250 Mpa.

9. A secondary battery, comprising the separator of any one of claims 1 to 8.

10. An electric device, **characterized by** comprising the secondary battery of claim 9, and wherein the secondary battery provides electrical energy to the electric device.

FIG. 1

## INTERNATIONAL SEARCH REPORT

| | International application No. |
|---|---|
| | **PCT/CN2023/141609** |

| A. | CLASSIFICATION OF SUBJECT MATTER |
|---|---|

H01M 50/491(2021.01)i; H01M 10/0525(2010.01)i; H01M 50/414(2021.01)i; H01M 50/497(2021.01)i; H01M 50/489(2021.01)i; H01M 50/403(2021.01)i

According to International Patent Classification (IPC) or to both national classification and IPC

| B. | FIELDS SEARCHED |
|---|---|

Minimum documentation searched (classification system followed by classification symbols)

IPC/CPC: H01M 50/-; H01M 10/-

Documentation searched other than minimum documentation to the extent that such documents are included in the fields searched

Electronic data base consulted during the international search (name of data base and, where practicable, search terms used)

CNTXT, 中国期刊网全文数据库, CJFD, WPABS, DWPI, ENTXT: 隔膜, 基膜, 纳米纤维素, 孔隙率, 温度, 收缩率, 耐热, 氧化, 醛基, 酮基, 羧酸, diaphragm, film, nanocellulose, hole?, pore, shrinkage, MD, TD, oxygen, aldehyde, ketone, carboxylic acid

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116722314 A (SUNWODA POWER TECHNOLOGY CO., LTD.) 08 September 2023 (2023-09-08) claims 1-10 | 1-10 |
| X | CN 114050372 A (HUIZHOU LIWINON NEW ENERGY TECHNOLOGY CO., LTD.) 15 February 2022 (2022-02-15) description, paragraphs 0005-0022 | 1-4, 6-10 |
| Y | CN 114050372 A (HUIZHOU LIWINON NEW ENERGY TECHNOLOGY CO., LTD.) 15 February 2022 (2022-02-15) description, paragraphs 0005-0022 | 5-10 |
| Y | CN 115149209 A (HUNAN UNIVERSITY) 04 October 2022 (2022-10-04) description, paragraphs 0004-0019 | 5-10 |
| A | CN 109244329 A (HEFEI XIANJIE NEW ENERGY TECHNOLOGY CO., LTD.) 18 January 2019 (2019-01-18) entire description | 1-10 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **19 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/141609** |

### C. DOCUMENTS CONSIDERED TO BE RELEVANT

| Category* | Citation of document, with indication, where appropriate, of the relevant passages | Relevant to claim No. |
| --- | --- | --- |
| A | CN 114899549 A (ZHEJIANG UNIVERSITY OF SCIENCE AND TECHNOLOGY) 12 August 2022 (2022-08-12) entire description | 1-10 |
| A | US 2013280615 A1 (IMAI MASANORI et al.) 24 October 2013 (2013-10-24) entire description | 1-10 |
| A | US 2014335424 A1 (LEE SUN YOUNG et al.) 13 November 2014 (2014-11-13) entire description | 1-10 |

Form PCT/ISA/210 (second sheet) (July 2022)

## INTERNATIONAL SEARCH REPORT
### Information on patent family members

International application No.

**PCT/CN2023/141609**

| Patent document cited in search report | | | Publication date (day/month/year) | Patent family member(s) | | | Publication date (day/month/year) |
|---|---|---|---|---|---|---|---|
| CN | 116722314 | A | 08 September 2023 | None | | | |
| CN | 114050372 | A | 15 February 2022 | None | | | |
| CN | 115149209 | A | 04 October 2022 | None | | | |
| CN | 109244329 | A | 18 January 2019 | None | | | |
| CN | 114899549 | A | 12 August 2022 | None | | | |
| US | 2013280615 | A1 | 24 October 2013 | MX | 2013007712 | A | 26 September 2013 |
| | | | | ES | 2677471 | T3 | 02 August 2018 |
| | | | | RU | 2013134484 | A | 27 January 2015 |
| | | | | RU | 2542267 | C1 | 20 February 2015 |
| | | | | TW | 201332194 | A | 01 August 2013 |
| | | | | EP | 2647662 | A4 | 09 October 2013 |
| | | | | EP | 2647662 | A1 | 25 April 2018 |
| | | | | JP | 5461745 | B2 | 02 April 2014 |
| | | | | JPWO | 2013054884 | A1 | 30 March 2015 |
| | | | | KR | 20130088901 | A | 08 August 2013 |
| | | | | KR | 101446949 | B1 | 06 October 2014 |
| | | | | CA | 2824632 | A1 | 18 April 2013 |
| | | | | BR | 112013018606 | A2 | 18 October 2016 |
| | | | | WO | 2013054884 | A1 | 18 April 2013 |
| | | | | US | 8735000 | B2 | 27 May 2014 |
| US | 2014335424 | A1 | 13 November 2014 | EP | 2787561 | A1 | 08 October 2014 |
| | | | | EP | 2787561 | A4 | 22 July 2015 |
| | | | | KR | 101164650 | B1 | 27 July 2012 |
| | | | | JP | 2014534603 | A | 18 December 2014 |
| | | | | WO | 2013081228 | A1 | 06 June 2013 |

Form PCT/ISA/210 (patent family annex) (July 2022)

**EP 4 685 977 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310565790